# EUROPEAN PATENT SPECIFICATION

(11) **EP 4 654 301 B1**
(45) Date of publication and mention of the grant of the patent: **02.12.2026**
(21) Application number: 25156066.0
(22) Date of filing: 05.02.2025
(51) Int. Cl.: H01M 4/62, H01M 4/58, H01M 4/04, H01M 4/136, H01M 4/1397

(54) **ADDITIVE FOR LITHIUM ION BATTERY AND USE THEREOF**
ADDITIV FÜR LITHIUM-IONEN-BATTERIE UND VERWENDUNG DAVON
ADDITIF POUR BATTERIE AU LITHIUM-ION ET SON UTILISATION

(30) Priority: 21.05.2024 CN 202410633338
(43) Date of publication of application: 26.11.2025
(73) Proprietor: JiangXi Inspire Nano Materials Co., Ltd, Shangrao Jiangxi (CN)
(72) Inventor: ZHANG, Xiaohong, Shangrao (CN); ZENG, Xiang, Shangrao (CN); ZHANG, Chao, Shangrao (CN)
(74) Representative: Metida

(56) References cited:
- EP-A1- 3 805 154
- EP-A1- 4 250 403
- CN-A- 117 105 216
- US-A1- 2016 020 466
- US-A1- 2020 028 174
- US-A1- 2023 250 342

## Description

### TECHNICAL FIELD

The present disclosure relates to the technical field of lithium ion batteries, and in particular to an additive for lithium ion battery and use thereof.

### BACKGROUND

In the prior art, an effective way to improve the energy density of lithium ion batteries is to develop and design thick electrodes. However, there are at least two problems with thick electrodes, firstly, they have poor mechanical properties and are prone to cracking, and secondly, the nanosized cathode particles are difficult to disperse therein. EP3805154A1 discloses a carbon nanotube dispersion including carbon nanotubes (CNT), a polymer dispersant containing an amine, a phenolic compound including two or more aromatic rings, and an aqueous solvent, wherein the polymer dispersant and the phenolic compound including two or more aromatic rings are included in a weight ratio of 100:1 to 100:90, and having low viscosity and a small change of viscosity over time. EP4250403A1 discloses a dispersant for a lithium ion battery and a preparation method thereof, a positive slurry, and a lithium ion battery are provided. The dispersant includes a structural unit A derived from a solvophilic monomer, a structural unit B derived from a conjugated diene monomer, and a structural unit C derived from a high-adhesion monomer. The solvophilic monomer includes one or both of N-vinylpyrrolidone and an acrylamide monomer. The high-adhesion monomer includes one or both of an unsaturated nitrile monomer and an acrylate monomer. US20230250342A1 discloses a dispersant containing a copolymer that includes an aliphatic hydrocarbon structural unit, a nitrile group-containing structural unit, and a substituted or unsubstituted carbamoyl group-containing structural unit. US20200028174A1 discloses a positive electrode active material pre-dispersion composition which includes a lithium iron phosphate-based positive electrode active material, a dispersant, and a solvent, wherein the dispersant includes a hydrogenated nitrile butadiene rubber (HNBR). US20160020466A1 discloses a dispersion comprising a dispersion medium, a polymeric dispersing agent, and carbon nanotubes dispersed in the dispersion medium. The proportion of carbon nanotubes present in the form of agglomerates with an average agglomerate size of >=1 [mu]m to the total quantity of carbon nanotubes <=10 vol %, and >=70% of the carbon nanotubes which are not present in the agglomerated form have a length of >=200 nm.

### SUMMARY

Based on this, it is necessary to provide an additive that can solve the problems of easy cracking of thick electrodes and difficult dispersion of cathode particles.

An additive suitable for use as a dispersant for a conductive agent in a lithium ion battery, wherein the conductive agent includes a conductive material, and the raw materials of the additive have the following parts by weight:

| | |
|---|---|
| First Solvent | 40-70; |
| First polymer | 1-10; |
| Second polymer | 5-15; |
| Small molecule organic amine | 10-20; and |
| Stabilizer | 10-20; |

The first polymer is at least one of the following: ethyl cellulose, polyvinyl alcohol, polyvinyl butyral, ethylene-vinyl alcohol copolymer, and methyl vinyl ether-maleic anhydride linear copolymer;
The second polymer is at least one of the following: polyvinylpyrrolidone, hydrogenated nitrile rubber, polyacrylonitrile, polypyrrole, and styrene-acrylonitrile-acrylic acid copolymer; The small molecule organic amine is at least one of the following: ethanolamine, isopropanolamine, isobutanolamine, triethanolamine, anhydrous piperazine and guanidine carbonate;
The stabilizer is a hydrazine compound.

The additive for lithium ion batteries provided by this disclosure can be used as a dispersant for conductive agents in lithium ion batteries, which can significantly improve the dispersibility of the conductive agent, reduce the viscosity and fineness of the conductive agent slurry, and lower the resistivity of the electrode sheet.

The additive for lithium ion battery provided in the present disclosure is applied to the cathode slurry mixing process of the lithium ion battery, which can increase the viscosity and solid content of the slurry. Due to the increase in solid content, solvent evaporation is reduced during the production of thick electrode in the slurry mixing process, and the thick electrode is less prone to cracking, thus improving its mechanical properties. In addition, the additive can effectively promote the dispersion of the cathode particles, and at the same time, the viscosity stability of the cathode slurry material is better, and the coating uniformity is improved.

The first solvent dissolves the remaining components of the additive and has no other special function. Commonly used organic solvents may be used. For example, the first solvent is one of N-methylpyrrolidone (NMP), dimethyl sulfoxide, and dimethylformamide. Preferably, the first solvent is N-methylpyrrolidone.

Some optional embodiments are provided below, which are not an additional limitation to the above technical solution, and just further supplements or optimizations to the above technical solution. Without technical or logical contradictions, each optional embodiment may be combined to the above technical solution separately, or it may be combined among the optional embodiments.

Optionally, the raw materials of the additive have the following parts by weight:

| | |
|---|---|
| First Solvent | 40-60; |
| First polymer | 1-5; |
| Second polymer | 9-15; |
| Small molecule organic amine | 15-20; and |
| Stabilizer | 15-20. |

Optionally, the raw materials of the additive have the following parts by weight:

| | |
|---|---|
| First Solvent | 56; |
| First polymer | 1-5; |
| Second polymer | 9-15; |
| Small molecule organic amine | 15-20; and |
| Stabilizer | 15-20. |

Optionally, the first polymer has at least one nitrogen-free polar functional group, the first polymer has polyethylene as the main chain, and the nitrogen-free polar functional group is one of aldehyde, hydroxyl, carbonyl and acid anhydride.

The first polymer has a polyethylene main chain and polar functional groups such as hydroxyl, carboxyl, aldehyde, carbonyl, etc. on the main chain or side chains. Under the action of the polar functional groups, the polymer is soluble in solvents such as NMP. At the same time, the polyethylene hydrophobic structure of the main chain can be adsorbed onto the surface of the cathode active material or the conductive agent such as carbon nanotubes and carbon black, which can generate a steric hindrance in the cathode slurry mixing process or conductive agent dispersion to prevent the secondary agglomeration of the cathode active material or the conductive agent, thereby achieving the effect of maintaining stable viscosity and reducing fineness of the slurry.

Optionally, the first polymer is at least one of the following: ethyl cellulose (e.g., Ashland N7, Ashland N10), polyvinyl alcohol (e.g., Kuraray 3-98; Kuraray 5-98; Kuraray 11-98), polyvinyl butyral (PVB, e.g., Kuraray B30H), ethylene-vinyl alcohol copolymer (e.g., ethylene vinyl alcohol G176; ethylene vinyl alcohol E105), and methyl vinyl ether-maleic anhydride linear copolymer (e.g., Vertellus ZeMace60, Vertellus ZeMace400).

Optionally, the second polymer is at least one of the following: polyvinyl pyrrolidone (PVP, e.g., BASF K17, BASF K30), hydrogenated nitrile rubber (e.g., ARLANXEO 4307, Zannan ZNL3403), polyacrylonitrile (weight-average molecular weight: 80000-100000), polypyrrole, and styrene-acrylonitrile-acrylic acid copolymer (e.g., Japan UMGS210B).

The second polymer has nitrogen-containing polar functional groups, wherein nitrogen contains a lone pair of electrons, which can form large *π* bond with the carbon atom in the cathode material of lithium ion batteries, with good compatibility and providing an alkaline environment.

The first polymer and the second polymer preferably have a molecular weight of 5000-200000, and more preferably 5000-50000. If the molecular weight of the two is too small, they may decompose during the charging and discharging process of the lithium battery, or dissolve in the electrolyte, resulting in gas production or performance degradation of the battery. If the molecular weight of the two is too large, they may not be soluble in the solvent, or have a high dispersion viscosity in the slurry, without a significant effect on reducing viscosity. At least 5% of the mass of the first polymer and the second polymer is dissolved in NMP, and the viscosity range after dissolution is 10-1000 mPa·s. The viscosity range of NMP solution with 5% mass fraction of the first polymer at 25°C is in the range of 10 to 1000 mPa·s.The viscosity range of NMP solution with 5% mass fraction of the second polymer at 25°C is also in the range of 10 to 1000 mPa·s.

Unless otherwise specified, the viscosity in this application refers to the viscosity at 25 °C.

According to the present invention, the small molecule organic amine is at least one of the following: ethanolamine, isopropanolamine, isobutanolamine, triethanolamine, anhydrous piperazine, and guanidine carbonate.

The small molecule organic amine is used to adjust the pH value and provide an alkaline environment. It has strong polarity and forms a better wrapping for the conductive agent, thereby improving the wettability of the conductive material and making it easier to disperse.

Optionally, the stabilizer is at least one of the following: hydroxyethyl hydrazine, hydrazine hydrate, and carbohydrazide. Preferably, the stabilizer is hydroxyethyl hydrazine (CAS: 109-84-2). The stabilizer has a nitrogen-hydrazine structure and strong polarity, which can provide lone pairs of electrons and adsorbs onto the surface of cathode particles or carbon particles of lithium ion batteries, increasing the polarity of cathode particles or carbon particles, dispersing and stabilizing the particles, and preventing them from secondary agglomerating in the first solvent.

Optionally, the raw materials of the additive have the following parts by weight:

| | |
|---|---|
| First Solvent | 56; |
| Ethyl cellulose | 1-5; |
| Polyvinylpyrrolidone | 5-10; |
| Isobutanolamine | 15-20; and |
| Hydroxyethyl hydrazine | 15-20. |

Optionally, the raw materials of the additive have the following parts by weight:

| | |
|---|---|
| First Solvent | 56; |
| Ethylene-vinyl alcohol copolymer | 1-2; |
| Polyvinyl butyral | 1-2; |
| Hydrogenated nitrile rubber | 5-10; |
| Isobutanolamine | 15-20; and |
| Hydroxyethyl hydrazine | 15-20. |

Optionally, the raw materials of the additive have the following parts by weight:

| | |
|---|---|
| First Solvent | 56; |
| Polyvinyl butyral | 1-5; |
| Polypyrrole | 10-15; |
| Isopropanolamine | 15-20; and |
| Hydroxyethyl hydrazine | 15-20. |

Optionally, the preparation method of the additive includes the following steps:
dissolving the first polymer in the first solvent to obtain a first polymer solution;
dissolving the second polymer in the first solvent to obtain a second polymer solution; and
uniformly mixing the small molecule organic amine, the stabilizer, the first polymer solution and the second polymer solution at a temperature below 50°C to obtain the additive.

The first polymer and the second polymer may be dissolved in different first solvents separately, that is the first solvent is divided into at least two parts, one part is used to dissolve the first polymer and the other part is used to dissolve the second polymer. Alternatively, the first polymer and the second polymer may be dissolved in the first solvent simultaneously, that is, the first polymer and the second polymer are added into the same first solvent simultaneously, or the first polymer and the second polymer are dissolved sequentially in the first solvent, i.e., one polymer is first added to the first solvent, and then the other polymer is added to the first solvent.

The first polymer and the second polymer can be selected from a variety of different polymers. For polymers that require high-temperature dissolution (such as polyvinyl alcohol, ethylene-vinyl alcohol copolymer, methyl vinyl ether-maleic anhydride linear copolymer, hydrogenated nitrile rubber, polypyrrole and styrene-acrylonitrile-acrylic acid copolymer), they are dissolved at 80-100 °C under nitrogen protection (the dissolution time is selected according to actual needs, for example, 4-8 hours). After dissolution, the temperature of the polymers needs to be lowered to below 50°C before mixed with other components.

For polymers that do not require high-temperature dissolution (e.g., ethyl cellulose, polyvinyl pyrrolidone, polyvinyl butyral), they are dissolved for 0.5 to 2 hours under nitrogen protection.

The components are uniformly mixed under stirring conditions, and the mixing time is in a range of 0.5 h to 2 h.

The present disclosure also provides a use of the additive in a conductive agent.

The conductive agent includes: a second solvent, a conductive material and the additive, wherein the additive is added in an amount of 10% to 20% of the mass of the conductive material.

The second solvent may be common solvents for conductive agents, such as N-methylpyrrolidone (NMP) and dimethylformamide (DMF).

The conductive material is at least one of the following: carbon nanotubes, graphene, carbon black, Ketjen black, and nano carbon fiber (VGCF).

The present disclosure also provides a use of the additive in a cathode slurry of a lithium ion battery.

A cathode slurry of a lithium ion battery, wherein the raw materials have the following parts by weight:

| | |
|---|---|
| Lithium iron phosphate | 100; |
| Conductive agent | 1-5; |
| Adhesive PVDF | 1-5; |
| Additive | 0.1-0.5; and |
| Third Solvent | 40-50. |

The second solvent is a component of the conductive agent, and the third solvent is a component of cathode slurry of a lithium ion battery. The first solvent, the second solvent, and the first solvent in the additive each have specific references, and they may be the same or different solvents.

The third solvent may be N-Methyl-2-pyrrolidone (NMP), dimethylformamide (DMF), and other commonly used solvents for cathode slurries.

The viscosity of the cathode slurry of the lithium ion battery after 24 hours of storage is less than 12000 mPa·s.

The viscosity of the cathode slurry of the lithium ion battery after 24 hours of storage is less than 12000 mPa·s and greater than 9000 mPa·s.

The solid content of the cathode slurry of the lithium ion battery is greater than 65%.

The solid content of the cathode slurry of the lithium ion battery is greater than 65% and less than 70%.

By adding the additive to the cathode slurry of the lithium ion battery, the dispersion of nanosized lithium iron phosphate and conductive agents can be effectively promoted, effectively reducing the viscosity of the cathode slurry material. At the same viscosity level, the solid content in the cathode slurry can be increased by at least 6%, which improves efficiency and reducing consumption, prevents cracking, enhances the viscosity stability, and improves the coating uniformity of the cathode slurry material.

The additive provided in this disclosure has at least the following beneficial effects:
(1) It can be used as a dispersant in the dispersion process of conductive agents such as carbon nanotubes, graphene and carbon black, the usage amount is 10% to 20% of the mass of the conductive agent, which can significantly improve the dispersion of the conductive agent and reduce the viscosity of the slurry, as well as reduce the fineness of the conductive agent slurry and the resistivity of the conductive agent after the conductive agent made into the electrode sheet.
(2) In the slurry mixing process of lithium iron phosphate cathode, after adding the PVDF solution and conductive agent, adding the additive at a dosage of 0.1% to 0.5% of the mass of lithium iron phosphate cathode can significantly increase the solid content of the cathode slurry and reduce its viscosity.

### BRIEF DESCRIPTION OF DRAWINGS

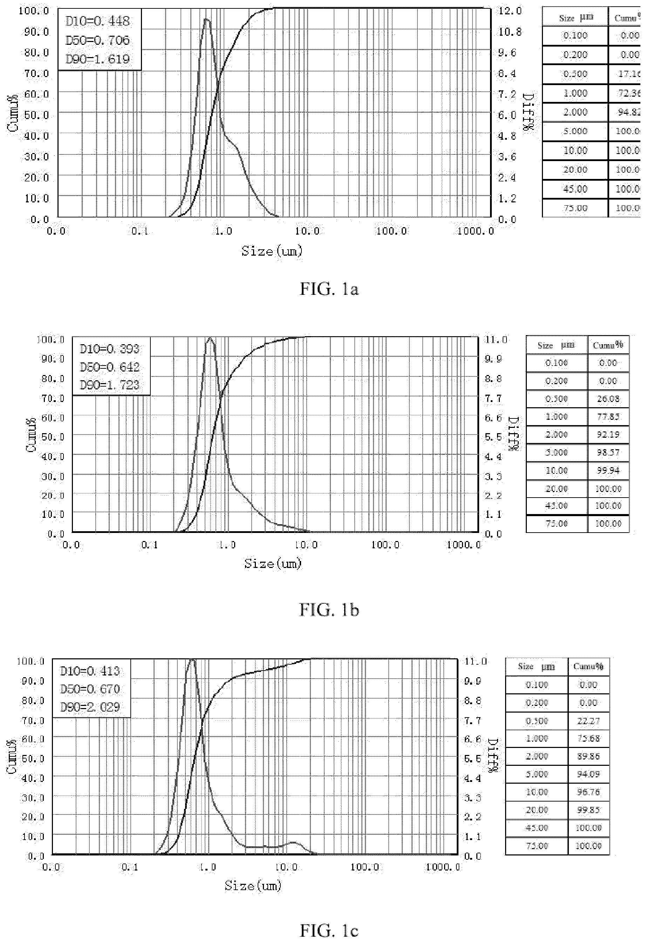

FIG. 1a is a particle size test graph of the additive prepared in Embodiment 1 applied to a conductive agent;
FIG. 1b is a particle size test graph of an additive prepared in Embodiment 2 applied to a conductive agent;
FIG. 1c is a particle size test graph of the additive prepared in Embodiment 3 applied to a conductive agent;

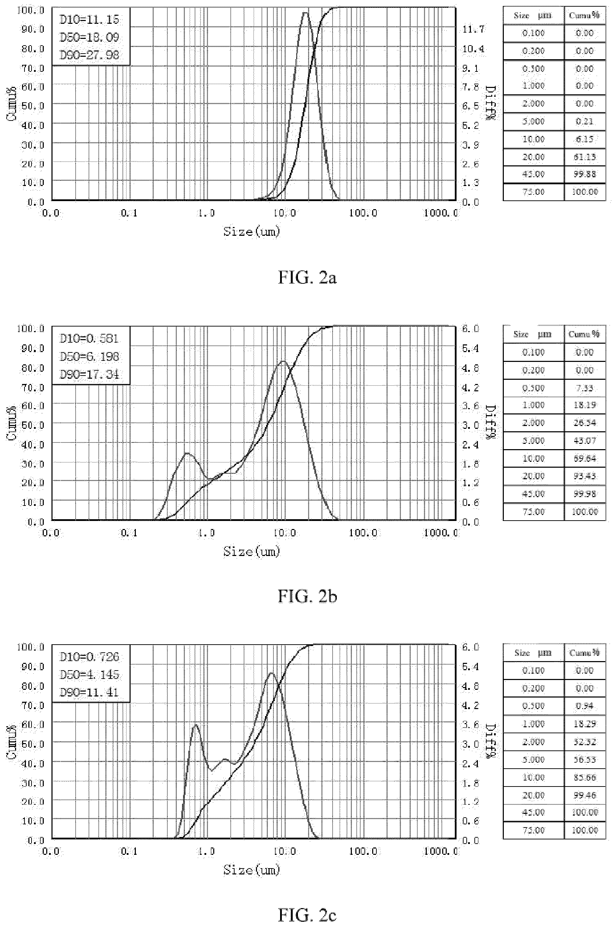

FIG. 2a is a particle size test graph of the additive prepared in Control Example 1 applied to a conductive agent;
FIG. 2b is a particle size test graph of the additive prepared in Control Example 2 applied to a conductive agent;
FIG. 2c is a particle size test graph of the additive prepared in Control Example 3 applied to a conductive agent;
FIG. 3a is an electrochemical performance test graph of a cathode slurry prepared in the Reference Example;
FIG. 3b is an electrochemical performance test graph of the additive prepared in Embodiment 1 applied to cathode slurry;
FIG. 4 shows the AC internal resistance (ACIR) test graph of the battery cells prepared in Experiments 1 to 3, in which the horizontal axis represents the number of battery packs;
FIG. 5 is a battery voltage test graph of the battery cells prepared in Experiments 1 to 3, in which the horizontal axis represents the number of battery packs;
FIG. 6 is a DC internal resistance (DCIR) test graph of the battery cells prepared in Experiments 1 to 3, in which the horizontal axis represents the number of battery packs.

### DESCRIPTION OF EMBODIMENTS

The technical solutions according to the embodiments of the present disclosure will be described clearly and fully in combination with the drawings according to the embodiments of the present disclosure. Apparently, the described embodiments are not all embodiments of the present disclosure, but only part of the embodiments of the present disclosure. Based on the disclosed embodiments, all other embodiments obtained by those skilled in the art without creative work fall into the scope of this invention.

For better description and illustration of the embodiments of the present disclosure, reference may be made to one or more drawings, however, the additional details or embodiments used to describe the drawings should not be considered as limiting to the scopes of any one of the inventions and creations, embodiments or preferred implementations described here of this application.

Unless otherwise defined, all technical and scientific terms used herein have the same meaning as those commonly understood by those skilled in the art to which this disclosure pertains. The terms used herein in the specification of this disclosure are only for the purpose of describing specific embodiments and are not intended to limit this disclosure.

### Embodiment 1

56 parts of N-methylpyrrolidone (NMP) were weighed as the first solvent, and 2.4 parts of ethyl cellulose (i.e., the first polymer, using Ashland N7, wherein the viscosity of NMP solution of 8% ethylcellulose at 25°C was 50 cPs) with a viscosity of 50 cPs were added into the first solvent at a high temperature of 100°C under nitrogen protection, and dissolved for 2 hours, and then the temperature was lowered to below 50 °C to obtain a first polymer solution. Then 9.6 parts of polyvinylpyrrolidone (i.e., the second polymer, using BASF K10, wherein the viscosity of the NMP solution of 8% polyvinylpyrrolidone at 25°C was 15 cPs) with a viscosity of 15 cPs were added into the first polymer solution and dissolved for 1 hour to obtain a mixed solution of first polymer and second polymer. Afterwards, 16 parts of isobutanolamine (i.e., the small molecule organic amine) and 16 parts of hydroxyethylhydrazine (i.e., the stabilizer) were added into the mixed solution of first polymer and second polymer, and the mixed solution was then stirred at a speed of 1200 rpm for 1 hour to obtain an additive.

### Embodiment 2

56 parts of N-methylpyrrolidone (NMP) were weighed as the first solvent, and 9.6 parts of hydrogenated nitrile rubber (i.e., the second polymer, using ARLANXEO 4307, wherein viscosity of NMP solution of 6% hydrogenated nitrile rubber at 25°C was 800cPs) and 1.2 parts of ethylene-vinyl alcohol copolymer (i.e., the first polymer, using Kuraray G176, wherein viscosity of the NMP solution of 3% ethylene vinyl alcohol copolymer at 25°C was 100 cPs) were added into the first solvent at a high temperature of 80°C and under nitrogen protection, and dissolved for 2 hours, and then the temperature was lowered to below 50°C to obtain a first polymer solution. Then 1.2 parts of polyvinyl butyral (i.e., the first polymer, using Kuraray B60H, wherein viscosity of NMP solution of 3% polyvinyl butyral at 25°C was 20 cPs) were added into the first polymer solution and dissolved for 1 hour to obtain a mixed solution of the first polymer and the second polymer. Afterwards, 16 parts of isobutanolamine (i.e., the small molecule organic amine) and 16 parts of hydroxyethyl hydrazine (i.e., the stabilizer) were added to the mixed solution of first polymer and second polymer, and the mixed solution was stirred at a speed of 1200 rpm for 1 hour to obtain an additive.

### Embodiment 3

50 parts of N-methylpyrrolidone (NMP) were weighed as the first solvent. 15 parts of polypyrrole (i.e., the second polymer, wherein viscosity of the NMP solution of 3% polypyrrole at 25°C was 100 cPs) were added into the first solvent at 80°C under nitrogen protection, and dissolved for 2 hours, and then the temperature was lowered to below 50°C to obtain a second polymer solution. Then 2 parts of polyvinyl butyral (i.e., the first polymer, using Kuraray B60H, wherein viscosity of NMP solution of 3% polyvinyl butyral at 25°C was 20 cPs) (brand: Kuraray B60H) were added into the second polymer solution and dissolved for 1 hour to obtain a mixed solution of the first polymer and the second polymer. Afterwards, 16 parts of isopropanolamine (i.e., the small molecule organic amine) and 16 parts of hydroxyethyl hydrazine (i.e., the stabilizer) were added into the mixed solution of the first polymer and the second polymer, and the mixed solution was then stirred at a speed of 1200 rpm for 1 hour to obtain an additive.

### Control Example 1: No polymer added

68 parts of N-methylpyrrolidone (NMP) were weighed as the first solvent, and 16 parts of isobutanolamine and 16 parts of hydroxyethylhydrazine were added into the first solvent, which was then stirred at a speed of 1200 rpm for 1 hour to obtain an additive.

### Control Example 2: No organic amine or stabilizer added

72 parts of N-methylpyrrolidone (NMP) were weighed as the first solvent, and 2.4 parts of ethyl cellulose (i.e., the first polymer, using Ashland N7, wherein the viscosity of NMP solution of 8% ethylcellulose at 25°C was 50 cPs) were added into the first solvent at a high temperature of 100°C and under nitrogen protection, and dissolved for 2 hours, and then the temperature was lowered to less than 50°C to obtain a first polymer solution. Afterwards, 9.6 parts of polyvinylpyrrolidone (i.e., the second polymer, using BASF K10, wherein the viscosity of the NMP solution of 8% polyvinylpyrrolidone at 25°C was 15 cPs) were added into the first polymer solution and dissolved for 1 hour to obtain an additive.

### Control Example 3: No stabilizer added

56 parts of N-methylpyrrolidone (NMP) were weighed as the first solvent, 2.4 parts of ethyl cellulose (i.e., the first polymer, using Ashland N7, wherein the viscosity of NMP solution of 8% ethylcellulose at 25°C was 50 cPs) were added into the first solvent at a high temperature of 100°C and under nitrogen protection, and the temperature was lowered to below 50°C after dissolving for 2 hours to obtain a first polymer solution. Then 9.6 parts of polyvinylpyrrolidone (i.e., the second polymer, using BASF K10, wherein the viscosity of the NMP solution of 8% polyvinylpyrrolidone at 25°C was 15 cPs) were added into the first polymer solution and dissolved for 1 hour to obtain a mixed solution of the first polymer and the second polymer. Afterwards, 32 parts of isopropanolamine were added into the mixed solution of the first polymer and the second polymer, and the mixed solution was then stirred at a speed of 1200 rpm for 1 hour to obtain an additive.

### Application Example 1: Application in Conductive Agent

89.3 parts of N-methylpyrrolidone (NMP) were weighed, 6.7 parts of the additive were added and mixed uniformly, and 5 parts of 5-10 nm multi-walled carbon nanotubes were added and ground to disperse with a dispersion line speed of 15 m/s, to obtain a conductive agent. After uniform dispersion, the viscosity, scraper fineness, particle size and diaphragm resistivity of the conductive agent were tested. The test results of the additive prepared in each Embodiment and control Example applied to the conductive agent are shown in Table 1.

**Table 1**

| Ser. No. | Viscosity /mPa·s | Scraper fineness /µm | Resistivity / mΩ·cm | D₁₀ /µm | D₅₀ /µm | D₉₀ /µm | D₉₉ /µm | Remark |
|---|---|---|---|---|---|---|---|---|
| Embodiment 1 | 436 | 10 | 16 | 0.448 | 0.706 | 1.619 | 2.911 | |
| Embodiment 2 | 487 | 15 | 18 | 0.393 | 0.642 | 1.723 | 5.749 | |
| Embodiment 3 | 523 | 10 | 14 | 0.413 | 0.670 | 2.029 | 14.96 | |
| Control Example 1 | 1320 | >100 | 87 | 11.15 | 18.09 | 27.98 | 37.83 | Delamination, solid-liquid separation |
| Control Example 2 | 8760 | 25 | 23 | 0.581 | 6.198 | 17.34 | 30.78 | With greater viscosity, particle size and diaphragm resistivity |
| Control Example 3 | 1450 | 30 | 20 | 0.726 | 4.145 | 11.41 | 18.47 | With larger maximum particles |

As shown in Table 1, the viscosity of the conductive agent slurry with the additive of Embodiments 1 to 3 is smaller than that of the conductive agent slurry with the additive of Control Examples 1 to 3.

Based on the data in Table 1, it can be seen that the conductive agent slurry with the additive of Embodiments 1 to 3 have smaller fineness.

As shown in Table 1, the resistivity of the conductive agent slurry with the additive of Embodiments 1 to 3 are smaller than that of the conductive agent slurry with the additive of control Examples 1 to 3.

The addition of additives in Embodiments 1 to 3 reduces the viscosity, fineness, and resistivity of the conductive agent slurry, which can be shown to improve the dispersion properties of the conductive agent very well.

### Application Example 2: Application in Cathode Slurry

The cathode slurry was prepared in the ratio of lithium iron phosphate: carbon black: binder PVDF: additive: NMP = 97:1:2.5:0.2:43.67. After the cathode slurry was prepared, the viscosity was tested at the initial stage, after 2 hours, 4 hours, 8 hours, and 24 hours, and the viscosity and diaphragm resistance were tested, too. The results are shown in Table 2.

In Table 2, no additive was added in the Reference Example.

**Table 2**

| Ser. No. | Initial viscosity/ mPa·s | 2-hour viscosity/ mPa·s | 4-hour viscosity/ mPa·s | 8-hour viscosity /mPa·s | 24-hour viscosity/ mPa·s | Diaphragm resistance/ Ω·cm | Remark |
|---|---|---|---|---|---|---|---|
| Reference Example | 45000 | 65000 | 72000 | 74500 | 78900 | 65.4 | No other additive |
| Embodiment 1 | 3653 | 4131 | 4819 | 5237 | 9813 | 55.4 | |
| Embodiment 2 | 4113 | 4475 | 4870 | 5170 | 10085 | 68.4 | |
| Embodiment 3 | 3013 | 3505 | 3922 | 4472 | 8987 | 61.3 | |
| Control Example 1 | 4053 | 8760 | 12300 | 18400 | 20500 | 58.4 | Large viscosity rebound |
| Control Example 2 | 37600 | 56750 | 65740 | 72500 | 76800 | 58.4 | High viscosity |
| Control Example 3 | 9863 | 12450 | 15320 | 17540 | 17850 | 63.5 | Viscosity decreases but remains high |

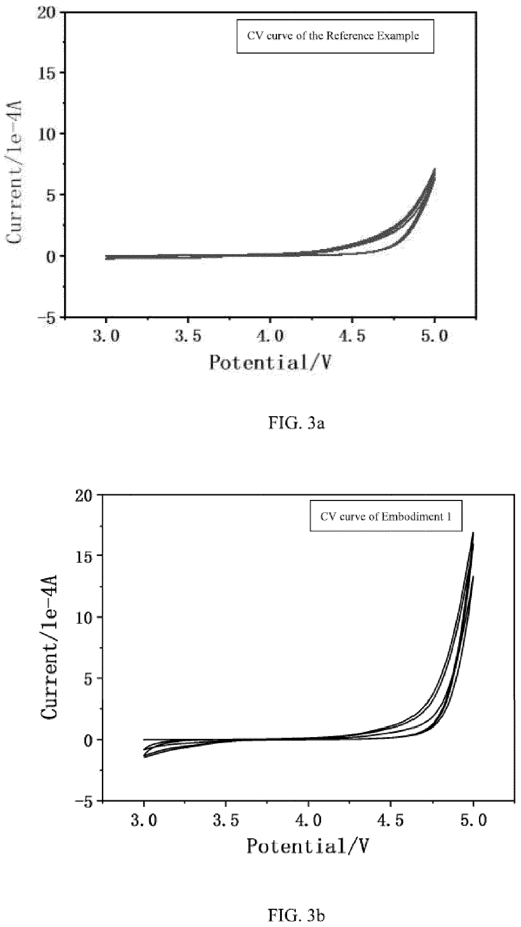

The CV curve of the cathode slurry prepared in the Reference Example is shown in FIG. 3a, and the CV curve of the cathode slurry having the additive prepared in Embodiment 1 is shown in FIG. 3b. It can be seen that there is no significant difference in the electrochemical performance test between the cathode slurry with additives and the normal one without additives. The additive of the embodiments has no obvious redox peaks at voltages above 4.5V, without decomposition, indicating that the additive is stable in the battery and does not undergo any side reactions, and is thus eligible to be applied in a high-voltage system.

As shown in Table 2, after adding the additive prepared in each embodiment, the viscosity of the cathode slurry is significantly reduced, and the diaphragm resistivity is slightly decreased, indicating that the viscosity of the cathode slurry can be reduced by introducing the additive. Therefore, in the actual production of thick electrodes, the content of active ingredients can be increased and the amount of the third solvent can be reduced, which can improve the baking efficiency of the electrodes and prevent the electrodes from cracking. Meanwhile, the diaphragm resistivity of the cathode slurry with additive is basically the same as that without additive, indicating that the additives will not affect the internal resistance of the battery. Although the additive of the disclosure is not conductive, it can help disperse the cathode and conductive agent, improving the overall battery performance.

### Battery Performance Characterization Test

Cathode slurry was prepared according to the configuration shown in Table 3, and battery cells were made to test the AC internal resistance, platform voltage, and DC internal resistance.

**Table 3**

| Parameter | Experiment 1 | Experiment 2 | Experiment 3 |
|---|---|---|---|
| System | 280 Iron-Lithium System | | |
| Cathode | 280 Iron-Lithium ratio | Iron-lithium ratio with addition of 0.2% of additive prepared in Control Example 1 | Iron-lithium ratio with addition of 0.03% of additive prepared in Embodiment 1 |
| Mixing process | Wet Mixing Process | Wet Mixing Process | Wet Mixing Process |
| Solid content/% | 60.2 | 66.1 | 66.6 |
| Slurry viscosity/ mPa·s | | 4210 | 4010 |
| Slurry fineness/ µm | 40 | 40 | 40 |

The ratio of 280 lithium iron cathode slurry is lithium iron phosphate: carbon black: binder PVDF: NMP = 97:1:2.5:43.67.

In Experiment 2, 0.2% of the additive prepared in control Example 1 was added, that is, the amount of the additive prepared in control Example 1 was 0.2% of the mass of the lithium iron phosphate. Similarly, in Experiment 3, 0.03% of the additive prepared in Embodiment 1 was added, that is, the amount of the additive prepared in Embodiment 1 was 0.03% of the mass of the lithium iron phosphate.

As shown in Table 3, the solid content in Experiment 3 was increased to 66.6%, and the slurry viscosity in Experiment 3 was reduced to 4010 Mpa·s.

The cathode slurry prepared in Experiments 1, 2 and 3 showed no obvious abnormalities such as particles and scratches during the electrode sheet coating process, as well as belt breakage or wrinkles during rolling.

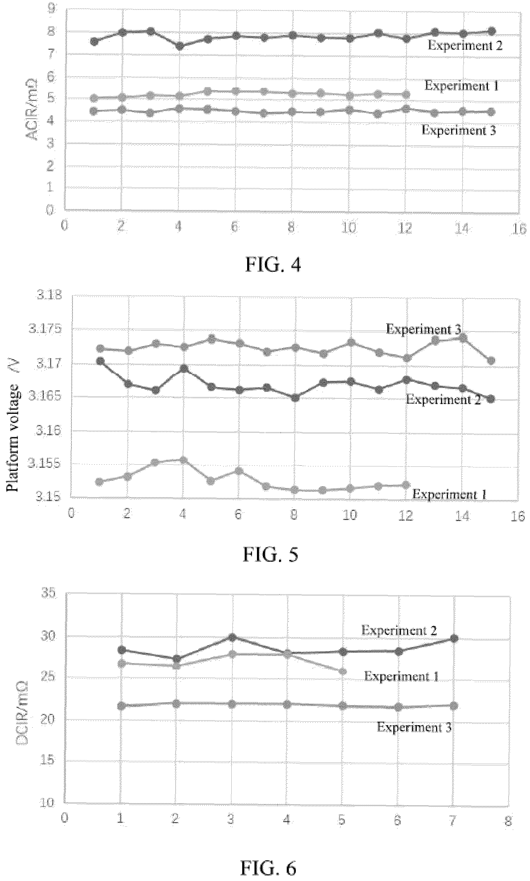

As shown in FIG. 4, in Experiment 2, the AC internal resistance of the battery cell increased after adding the additive prepared in Control Example 1, while in Experiment 3, the AC internal resistance of the battery cell decreased by more than 30% after adding the additive prepared in Embodiment 1.

As shown in FIG. 5, the platform voltage in Experiments 2 and 3 increased by about 5%, while the platform voltage in Experiment 1 was relatively low.

As shown in FIG. 6, in Experiment 3, the DC internal resistance of the battery cell was reduced by nearly 50% after adding the additive prepared in Embodiment 1.

The test results of the standard charge and discharge energy retention rate (1P/0.5P; 2P/0.5P) in Experiments 1, 2, and 3 are shown in Tables 4 and 5. In Experiment 3, the 0.5P voltage platform and 2P charge energy retention rate of the battery cell had been significantly improved after adding the additive prepared in the Embodiment 1.

**Table 4**

| Battery cell | 0.5P charge capacity /Ah | 0.5P charge energy /Wh | 0.5P discharge capacity /Ah | 0.5P discharge energy /Wh | 0.5P platform voltage /V | 1P charge capacity /Ah | 1P charge energy /W | 1P discharge capacity /Ah | 1P discharge energy /W |
|---|---|---|---|---|---|---|---|---|---|
| Experiment 1 | 4.342 | 14.796 | 4.335 | 13.714 | 3.1636 | 4.22 | 14.621 | 4.029 | 12.431 |
| Experiment 1 | 4.403 | 14.982 | 4.42 | 13.981 | 3.1631 | 4.289 | 14.843 | 4.125 | 12.72 |
| Experiment 1 | 4.401 | 14.977 | 4.41 | 13.953 | 3.1639 | 4.284 | 14.831 | 4.132 | 12.745 |
| Average value | | | | | 3.1635 | | | | |
| Experiment 2 | 4.413 | 14.995 | 4.42 | 14.053 | 3.1794 | 4.307 | 14.835 | 4.119 | 12.838 |
| Experiment 2 | 4.419 | 15.019 | 4.423 | 14.029 | 3.1718 | 4.306 | 14.862 | 4.114 | 12.762 |
| Experiment 2 | 4.413 | 14.987 | 4.414 | 14.014 | 3.1749 | 4.308 | 14.836 | 4.122 | 12.824 |
| Average value | | | | | 3.1754 | | | | |
| Experiment 3 | 4.564 | 15.468 | 4.569 | 14.547 | 3.1838 | 4.476 | 15.369 | 4.228 | 13.39 |
| Experiment 3 | 4.547 | 15.427 | 4.559 | 14.528 | 3.1867 | 4.464 | 15.34 | 4.29 | 13.405 |
| Experiment 3 | 4.554 | 15.437 | 4.555 | 14.51 | 3.1855 | 4.457 | 15.314 | 4.267 | 13.329 |
| Average value | | | | | 3.1853 | | | | |

**Table 5**

| Battery cell | 1P charge energy retention rate/% | 1P discharge energy retention rate/% | 2P charge capacity /Ah | 2P charge energy /W | 2P discharge capacity /Ah | 2P discharge energy /W | 2P charge energy retention rate/% | 2P discharge energy retention rate/% |
|---|---|---|---|---|---|---|---|---|
| Experiment 1 | 98.82 | 90.64 | 3.727 | 13.216 | 3.681 | 10.913 | 89.32 | 79.58 |
| Experiment 1 | 99.07 | 90.98 | 3.819 | 13.541 | 3.747 | 11.088 | 90.38 | 79.31 |
| Experiment 1 | 99.03 | 91.34 | 3.817 | 13.532 | 3.782 | 11.197 | 90.35 | 80.25 |
| Average value | 98.97 | 90.99 | | | | | 90.02 | 79.71 |
| Experiment 2 | 98.93 | 91.35 | 4.049 | 14.239 | 3.768 | 11.393 | 94.96 | 81.07 |
| Experiment 2 | 98.95 | 90.97 | 3.926 | 13.873 | 3.728 | 11.16 | 92.37 | 79.55 |
| Experiment 2 | 98.99 | 91.51 | 4.048 | 14.236 | 3.786 | 11.415 | 94.99 | 81.45 |
| Average value | 98.21 | 91.24 | | | | | 92.28 | 79.87 |
| Experiment 3 | 99.36 | 92.05 | 4.243 | 14.875 | 3.913 | 11.855 | 96.17 | 81.49 |
| Experiment 3 | 99.44 | 92.27 | 4.216 | 14.782 | 3.937 | 11.941 | 95.82 | 82.19 |
| Experiment 3 | 99.20 | 91.86 | 4.21 | 14.771 | 3.883 | 11.767 | 95.69 | 81.10 |
| Average value | 99.33 | 92.06 | | | | | 95.89 | 81.59 |

The test results of the standard charge and discharge energy retention rate (1P/0.5P; 2P/0.5P) of Experiments 1, 2, and 3 are shown in Table 6 and Table 7. In Experiment 3, the platform voltage and 1P and 2P charge and discharge energy efficiency of the battery had been significantly improved after adding the additive prepared in Embodiment 1.

**Table 6**

| Battery cell | 0.5P charge capacit /Ah ty | 0.5P charge energy /Wh | 0.5P discharge capacity /Ah | 0.5P discharge energy /Wh | 0.5P platform voltage /V | 0.5P charge & discharge energy efficiency /% | 1P charge capacity /Ah | 1P charge energy /Wh | 1P discharge capacity /Ah | 1P discharge energy /W |
|---|---|---|---|---|---|---|---|---|---|---|
| Experiment 1 | 4.342 | 14.796 | 4.335 | 13.714 | 3.1636 | 92.69 | 4.134 | 14.322 | 3.937 | 12.152 |
| Experiment 1 | 4.403 | 14.982 | 4.42 | 13.981 | 3.1631 | 93.32 | 4.204 | 14.559 | 4.032 | 12.447 |
| Experiment 1 | 4.401 | 14.977 | 4.41 | 13.953 | 3.1639 | 93.16 | 4.205 | 14.564 | 4.036 | 12.457 |
| Average value | | | | | 3.1635 | 93.06 | | | | |
| Experiment 2 | 4.413 | 14.995 | 4.42 | 14.053 | 3.1794 | 93.72 | 4.199 | 14.466 | 4.033 | 12.584 |
| Experiment 2 | 4.419 | 15.019 | 4.423 | 14.029 | 3.1718 | 93.41 | 4.198 | 14.495 | 4.024 | 12.508 |
| Experiment 2 | 4.413 | 14.987 | 4.414 | 14.014 | 3.1749 | 93.51 | 4.201 | 14.471 | 4.033 | 12.563 |
| Average value | | | | | 3.1754 | 93.54 | | | | |
| Experiment 3 | 4.564 | 15.468 | 4.569 | 14.547 | 3.1838 | 94.05 | 4.373 | 15.027 | 4.198 | 13.124 |
| Experiment 3 | 4.547 | 15.427 | 4.559 | 14.528 | 3.1867 | 94.17 | 4.36 | 14.997 | 4.193 | 13.119 |
| Experiment 3 | 4.554 | 15.437 | 4.555 | 14.51 | 3.1855 | 93.99 | 4.335 | 14.973 | 4.178 | 13.067 |
| Average value | | | | | 3.1853 | 94.07 | | | | |

**Table 7**

| Battery cell | 1P continuous discharge platform voltage/V | 1P charge and discharge energy efficiency/% | 2P charge capacity /Ah | 2P charge energy/ W | 2P discharge capacity/ Ah | 2P discharge energy/ W | 2P continuous discharge platform voltage/V | 2P charge and discharge energy efficiency/% |
|---|---|---|---|---|---|---|---|---|
| Experiment 1 | 3.0866 | 84.85 | 3.746 | 13.276 | 3.235 | 9.617 | 2.9728 | 72.44 |
| Experiment 1 | 3.0871 | 85.49 | 3.823 | 13.548 | 3.31 | 9.82 | 2.9668 | 72.48 |
| Experiment 1 | 3.0865 | 85.53 | 3.817 | 13.526 | 3.329 | 9.878 | 2.9673 | 73.03 |
| Average value | 3.0867 | 85.29 | | | | | 2.9689 | 72.65 |
| Experiment 2 | 3.1203 | 86.99 | 4.053 | 14.238 | 3.518 | 10.672 | 3.0335 | 74.95 |
| Experiment 2 | 3.1083 | 86.29 | 3.981 | 14.034 | 3.419 | 10.267 | 3.0029 | 73.16 |
| Experiment 2 | 3.1151 | 86.82 | 4.046 | 14.218 | 3.527 | 10.67 | 3.0252 | 75.05 |
| Average value | 3.1146 | 86.70 | | | | | 3.0206 | 74.39 |
| Experiment 3 | 3.1263 | 87.34 | 4.226 | 14.814 | 3.662 | 11.129 | 3.0390 | 75.12 |
| Experiment 3 | 3.1288 | 87.48 | 4.197 | 14.715 | 3.657 | 11.128 | 3.0429 | 75.62 |
| Experiment 3 | 3.1276 | 87.27 | 4.201 | 14.731 | 3.629 | 11.029 | 3.0391 | 74.87 |
| Average value | 3.1275 | 87.36 | | | | | 3.0404 | 75.21 |

As shown in Table 8, there is substantially no difference in the high temperature charge and discharge performance of the batteries in Experiments 1, 2 and 3.

**Table 8**

| 25°C | | | | | 45°C | | | | | | |
|---|---|---|---|---|---|---|---|---|---|---|---|
| Battery cell | Charge capacity /Ah | Charge energy /W | Discharge capacity /Ah | Discharge energy /W | Charge capacity /Ah | Charge energy /W | Discharge capacity /Ah | Discharge energy /W | Charge energy retenti on/% | Discharg e energy retention /% | Charge and discharge efficiency /% |
| Experiment 1 | 4.537 | 15.41 | 4.348 | 13.753 | 4.485 | 15.138 | 4.713 | 15.106 | 98.23 | 109.84 | 99.79 |
| Experiment 1 | 4.547 | 15.45 | 4.361 | 13.788 | 4.492 | 15.154 | 4.71 | 15.121 | 98.08 | 109.67 | 99.78 |
| Average value | | | | | | | | | 98.16 | 109.75 | 99.79 |
| Experiment 2 | 4.6214 | 15.772 | 4.5308 | 14.276 | 4.605 | 15.568 | 4.8925 | 15.659 | 98.71 | 109.69 | 100.58 |
| Experiment 2 | 4.5891 | 15.659 | 4.5345 | 14.32 | 4.5706 | 15.428 | 4.9067 | 15.762 | 98.53 | 110.07 | 102.17 |
| Average value | | | | | | | | | 98.62 | 109.88 | 101.37 |
| Experiment 3 | 4.7484 | 16.106 | 4.5351 | 14.382 | 4.7112 | 15.844 | 4.9264 | 15.868 | 98.37 | 110.33 | 100.16 |
| Experiment 3 | 4.901 | 16.608 | 4.6259 | 14.674 | 4.8413 | 16.284 | 5.0278 | 16.192 | 98.04 | 110.35 | 99.44 |
| Average value | | | | | | | | | 98.21 | 110.34 | 99.80 |

The above-described embodiments are merely illustrative of several implementations of the present invention, and the description is specific and particular, but is not to be construed as limiting the scope of the present application. It should be pointed out that for those of ordinary skill in the art, several variations and improvements can be made without departing from the concept of the present application, which are all regarded as falling within the protection scope of the present application. Therefore, the protection scope of the present application is defined by the appended claims.

## Claims

1. An additive suitable for use as a dispersant for a conductive agent in a lithium ion battery, wherein the conductive agent comprises a conductive material, and raw materials of the additive have following parts by weight:
| | |
|---|---|
| first solvent | 40-70; |
| first polymer | 1-10; |
| second polymer | 5-15; |
| small molecule organic amine | 10-20; and |
| stabilizer | 10-20; |
wherein the first polymer is at least one of the following: ethyl cellulose, polyvinyl alcohol, polyvinyl butyral, ethylene-vinyl alcohol copolymer, and methyl vinyl ether-maleic anhydride linear copolymer;
wherein the second polymer is at least one of the following: polyvinyl pyrrolidone, hydrogenated nitrile rubber, polyacrylonitrile, polypyrrole, and styrene-acrylonitrile-acrylic acid copolymer; wherein the small molecule organic amine is at least one of the following: ethanolamine, isopropanolamine, isobutanolamine, triethanolamine, anhydrous piperazine and guanidine carbonate; and
the stabilizer is a hydrazine compound.

2. The additive according to claim 1, wherein the raw materials of the additive have the following parts by weight:
| | |
|---|---|
| the first solvent | 40-60; |
| the first polymer | 1-5; |
| the second polymer | 9-15; |
| the small molecule organic amine | 15-20; and |
| the stabilizer | 15-20. |

3. The additive according to claim 1, wherein the raw materials of the additive have the following parts by weight:
| | |
|---|---|
| the first solvent | 56; |
| the first polymer | 1-5; |
| the second polymer | 9-15; |
| the small molecule organic amine | 15-20; and |
| the stabilizer | 15-20. |

4. The additive according to claim 1, wherein the raw materials of the additive have the following parts by weight:
| | |
|---|---|
| the first solvent | 56; |
| ethyl cellulose | 1-5; |
| polyvinylpyrrolidone | 5-10; |
| isobutanolamine | 15-20; and |
| hydroxyethyl hydrazine | 15-20. |

5. The additive according to claim 1, wherein the raw materials of the additive have the following parts by weight:
| | |
|---|---|
| the first solvent | 56; |
| ethylene-vinyl alcohol copolymer | 1-2; |
| polyvinyl butyral | 1-2; |
| hydrogenated nitrile rubber | 5-10; |
| isobutanolamine | 15-20; and |
| hydroxyethyl hydrazine | 15-20. |

6. The additive according to claim 1, wherein the raw materials of the additive have the following parts by weight:
| | |
|---|---|
| the first solvent | 56; |
| polyvinyl butyral | 1-5; |
| polypyrrole | 10-15; |
| isopropanolamine | 15-20; and |
| hydroxyethyl hydrazine | 15-20. |

7. The additive according to claim 1, wherein the stabilizer is at least one of the following: hydroxyethylhydrazine, hydrazine hydrate and carbohydrazide.

8. A preparation method of the additive according to claims 1 to 7, comprising the following steps of:
dissolving the first polymer in the first solvent to obtain a first polymer solution;
dissolving the second polymer in the first solvent to obtain a second polymer solution; and
uniformly mixing the small molecule organic amine, the stabilizer, the first polymer solution and the second polymer solution at a temperature below 50°C to obtain the additive.

9. A conductive agent comprising:
a second solvent;
a conductive material; and
the additive according to claims 1 to 7, wherein added amount of the additive is 10% to 20% of mass of the conductive material.

10. A cathode slurry for a lithium ion battery containing the additive according to claims 1 to 7, wherein raw materials have the following parts by weight:
| | |
|---|---|
| lithium iron phosphate | 100; |
| conductive agent | 1-5; |
| adhesive PVDF | 1-5; |
| the additive according to any one of claims 1 to 7 0.1-0.5; and third solvent | 40-50. |

11. The cathode slurry for a lithium ion battery according to claim 10, wherein solid content of the cathode slurry for a lithium ion battery is greater than 65%.

## Patentansprüche

1. Ein Additiv, das zur Verwendung als Dispergiermittel für ein Leitmittel in einer Lithium-Ionen-Batterie geeignet ist,
wobei das Leitmittel ein leitfähiges Material umfasst und die Rohstoffe des Additivs die folgenden Gewichtsteile aufweisen:
| | |
|---|---|
| erstes Lösungsmittel | 40-70; |
| erstes Polymer | 1-10; |
| zweites Polymer | 5-15; |
| niedermolekulares organisches Amin | 10-20; und |
| Stabilisator | 10-20; |
wobei das erste Polymer mindestens eines der folgenden ist: Ethylcellulose, Polyvinylalkohol, Polyvinylbutyral, Ethylen-Vinylalkohol-Copolymer und lineares Methylvinylether-Maleinsäureanhydrid-Copolymer;
wobei das zweite Polymer mindestens eines der folgenden ist: Polyvinylpyrrolidon, hydrierter Nitrilkautschuk, Polyacrylnitril, Polypyrrol und Styrol-Acrylnitril-Acrylsäure-Copolymer;
wobei das niedermolekulare organische Amin mindestens eines der folgenden ist:
Ethanolamin, Isopropanolamin, Isobutanolamin, Triethanolamin, wasserfreies Piperazin und Guanidincarbonat; und
der Stabilisator eine Hydrazinverbindung ist.

2. Das Additiv nach Anspruch 1, wobei die Rohstoffe des Additivs die folgenden Gewichtsteile aufweisen:
| | |
|---|---|
| das erste Lösungsmittel | 40-60; |
| das erste Polymer | 1-5; |
| das zweite Polymer | 9-15; |
| das niedermolekulare organische Amin | 15-20; und |
| der Stabilisator | 15-20. |

3. Das Additiv nach Anspruch 1, wobei die Rohstoffe des Additivs die folgenden Gewichtsteile aufweisen:
| | |
|---|---|
| das erste Lösungsmittel | 56; |
| das erste Polymer | 1-5; |
| das zweite Polymer | 9-15; |
| das niedermolekulare organische Amin | 15-20; und |
| der Stabilisator | 15-20. |

4. Das Additiv nach Anspruch 1, wobei die Rohstoffe des Additivs die folgenden Gewichtsteile aufweisen:
| | |
|---|---|
| das erste Lösungsmittel | 56; |
| Ethylcellulose | 1-5; |
| Polyvinylpyrrolidon | 5-10; |
| Isobutanolamin | 15-20; und |
| Hydroxyethylhydrazin | 15-20. |

5. Das Additiv nach Anspruch 1, wobei die Rohstoffe des Additivs die folgenden Gewichtsteile aufweisen:
| | |
|---|---|
| das erste Lösungsmittel | 56; |
| Ethylen-Vinylalkohol-Copolymer | 1-2; |
| Polyvinylbutyral | 1-2; |
| hydrierter Nitrilkautschuk | 5-10; |
| Isobutanolamin | 15-20; und |
| Hydroxyethylhydrazin | 15-20. |

6. Das Additiv nach Anspruch 1, wobei die Rohstoffe des Additivs die folgenden Gewichtsteile aufweisen:
| | |
|---|---|
| das erste Lösungsmittel | 56; |
| Polyvinylbutyral | 1-5; |
| Polypyrrol | 10-15; |
| Isopropanolamin | 15-20; und |
| Hydroxyethylhydrazin | 15-20. |

7. Das Additiv nach Anspruch 1, wobei der Stabilisator mindestens einer der folgenden ist: Hydroxyethylhydrazin, Hydrazinhydrat und Carbohydrazid.

8. Ein Herstellungsverfahren für das Additiv nach den Ansprüchen 1 bis 7, umfassend die folgenden Schritte:
lösen des ersten Polymers in dem ersten Lösungsmittel, um eine erste Polymerlösung zu erhalten;
lösen des zweiten Polymers in dem ersten Lösungsmittel, um eine zweite Polymerlösung zu erhalten; und
gleichmäßiges Mischen des niedermolekularen organischen Amins, des Stabilisators, der ersten Polymerlösung und der zweiten Polymerlösung bei einer Temperatur unter 50°C, um das Additiv zu erhalten.

9. Ein Leitmittel, umfassend:
ein zweites Lösungsmittel;
ein leitfähiges Material; und
das Additiv nach den Ansprüchen 1 bis 7, wobei die zugesetzte Menge des Additivs 10% bis 20% der Masse des leitfähigen Materials beträgt.

10. Eine Kathodenaufschlämmung für eine Lithium-Ionen-Batterie, enthaltend das Additiv nach den Ansprüchen 1 bis 7, wobei die Rohstoffe die folgenden Gewichtsteile aufweisen:
| | |
|---|---|
| Lithiumeisenphosphat | 100; |
| Leitmittel | 1-5; |
| Bindemittel PVDF | 1-5; |
| das Additiv nach einem der Ansprüche 1 bis 7 | 0.1-0.5; und |
| drittes Lösungsmittel | 40-50. |

11. Die Kathodenaufschlämmung für eine Lithium-Ionen-Batterie nach Anspruch 10, wobei der Feststoffgehalt der Kathodenaufschlämmung für eine Lithium-Ionen-Batterie größer als 65% ist.

## Revendications

1. Un additif approprié pour être utilisé comme dispersant pour un agent conducteur dans une batterie au lithium-ion, dans lequel l'agent conducteur comprend un matériau conducteur, et les matières premières de l'additif ont les parties en poids suivantes:
| | |
|---|---|
| le premier solvant | 40-70; |
| le premier polymère | 1-10; |
| le deuxième polymère | 5-15; |
| l'amine organique à petite molécule | 10-20; et |
| le stabilisant | 10-20; |
dans lequel le premier polymère est au moins l'un des composés suivants: l'éthylcellulose, l'alcool polyvinylique, le butyral de polyvinyle, le copolymère éthylène-alcool vinylique et le copolymère linéaire d'éther méthylvinylique-anhydride maléique;
dans lequel le deuxième polymère est au moins l'un des composés suivants: la polyvinylpyrrolidone, le caoutchouc nitrile hydrogéné, le polyacrylonitrile, le polypyrrole et le copolymère styrène-acrylonitrile-acide acrylique;
dans lequel l'amine organique à petite molécule est au moins l'un des composés suivants:
l'éthanolamine, l'isopropanolamine, l'isobutanolamine, la triéthanolamine, la pipérazine anhydre et le carbonate de guanidine; et
le stabilisant est un composé d'hydrazine.

2. L'additif selon la revendication 1, dans lequel les matières premières de l'additif ont les parties en poids suivantes:
| | |
|---|---|
| le premier solvant | 40-60; |
| le premier polymère | 1-5; |
| le deuxième polymère | 9-15; |
| l'amine organique à petite molécule | 15-20; et |
| le stabilisant | 15-20. |

3. L'additif selon la revendication 1, dans lequel les matières premières de l'additif ont les parties en poids suivantes:
| | |
|---|---|
| le premier solvant | 56; |
| le premier polymère | 1-5; |
| le deuxième polymère | 9-15; |
| l'amine organique à petite molécule | 15-20; et |
| le stabilisant | 15-20. |

4. L'additif selon la revendication 1, dans lequel les matières premières de l'additif ont les parties en poids suivantes:
| | |
|---|---|
| le premier solvant | 56; |
| l'éthylcellulose | 1-5; |
| la polyvinylpyrrolidone | 5-10; |
| l'isobutanolamine | 15-20; et |
| l'hydroxyéthylhydrazine | 15-20. |

5. L'additif selon la revendication 1, dans lequel les matières premières de l'additif ont les parties en poids suivantes:
| | |
|---|---|
| le premier solvant | 56; |
| le copolymère éthylène-alcool vinylique | 1-2; |
| le butyral de polyvinyle | 1-2; |
| le caoutchouc nitrile hydrogéné | 5-10; |
| l'isobutanolamine | 15-20; et |
| l'hydroxyéthylhydrazine | 15-20. |

6. L'additif selon la revendication 1, dans lequel les matières premières de l'additif ont les parties en poids suivantes:
| | |
|---|---|
| le premier solvant | 56; |
| le butyral de polyvinyle | 1-5; |
| le polypyrrole | 10-15; |
| l'isopropanolamine | 15-20; et |
| l'hydroxyéthylhydrazine | 15-20. |

7. L'additif selon la revendication 1, dans lequel le stabilisant est au moins l'un des composés suivants: l'hydroxyéthylhydrazine, l'hydrate d'hydrazine et le carbohydrazide.

8. Un procédé de préparation de l'additif selon les revendications 1 à 7, comprenant les étapes suivantes:
dissoudre le premier polymère dans le premier solvant pour obtenir une première solution de polymère;
dissoudre le deuxième polymère dans le premier solvant pour obtenir une deuxième solution de polymère; et
mélanger uniformément l'amine organique à petite molécule, le stabilisant, la première solution de polymère et la deuxième solution de polymère à une température inférieure à 50 °C pour obtenir l'additif.

9. Un agent conducteur comprenant:
un deuxième solvant;
un matériau conducteur; et
l'additif selon les revendications 1 à 7, dans lequel la quantité ajoutée de l'additif est de 10% à 20% de la masse du matériau conducteur.

10. Une suspension de cathode pour une batterie au lithium-ion contenant l'additif selon les revendications 1 à 7, dans laquelle les matières premières ont les parties en poids suivantes:
| | |
|---|---|
| phosphate de fer et de lithium | 100; |
| agent conducteur | 1-5; |
| PVDF adhésif | 1-5; |
| l'additif selon l'une quelconque des revendications 1 à 7 | 0.1-0.5; et |
| troisième solvant | 40-50. |

11. La suspension de cathode pour une batterie au lithium-ion selon la revendication 10, dans laquelle la teneur en matières solides de la suspension de cathode pour une batterie au lithium-ion est supérieure à 65%.
